# EUROPÄISCHE PATENTSCHRIFT

(11) **EP 3 009 708 B1**
(45) Veröffentlichungstag und Bekanntmachung des Hinweises auf die Patenterteilung: **17.01.2018**
(21) Anmeldenummer: 15181550.3
(22) Anmeldetag: 19.08.2015
(51) Int. Cl.: F16F 9/46, F16F 9/06

(54) **SCHWINGUNGSDÄMPFER MIT UNABHÄNGIG VONEINANDER EINSTELLBARER DÄMPFUNG FÜR DIE ZUGSTUFE UND DIE DRUCKSTUFE**
VIBRATION DAMPER WITH INDEPENDENTLY ADJUSTABLE SHOCK ABSORPTION FOR THE TRACTION PHASE AND THE PRESSURE PHASE
AMORTISSEUR D'OSCILLATIONS AVEC AMORTISSEMENT AUTONOME REGLABLE POUR LE PALIER DE PRESSION ET LE PALIER DE TRACTION

(30) Priorität: 01.09.2014 DE 102014112523
(43) Veröffentlichungstag der Anmeldung: 20.04.2016
(73) Patentinhaber: WP Performance Systems GmbH, 5222 Munderfing (AT)
(72) Erfinder: EVENHUIS, Boudewijn Michiel, 6611AZ Overasselt (NL)
(74) Vertreter: Söllner, Udo

(56) Entgegenhaltungen:
- EP-A1- 2 166 250
- EP-A2- 2 565 491
- DE-A1- 3 608 738
- JP-A- 2002 181 114

## Beschreibung

Die vorliegende Erfindung betrifft einen Schwingungsdämpfer mit einem zur Aufnahme von Dämpfungsfluid ausgebildeten Zylinder und einem darin axial beweglichen Arbeitskolben nach dem Oberbegriff des Anspruchs 1.

Ein gattungsgemäßer Schwingungsdämpfer kann zur Bedämpfung von Federbewegungen an Fahrzeugen, beispielsweise Motorrädern eingesetzt werden.

Das Dokument EP 2 565 491 A2 bildet den nächstliegenden Stand der Technik und offenbart alle Merkmale des Oberbegriffs des Anspruchs 1.

Anhand der DE 10 2004 014 458 B4 ist eine Vorderradgabel für ein Motorrad bekannt geworden, bei der als Stoßdämpfungseinrichtung ein Doppelstangen-Stoßdämpfer eingesetzt wird. Dieser weist einen Arbeitszylinder mit einem Arbeitskolben auf, der den Innenraum des Arbeitszylinders in zwei Arbeitsräume unterteilt.

Anhand der DE 10 2006 052 228 B4 ist eine ähnliche Vorderradgabel bekannt geworden, die ebenfalls einen Doppelstangen-Stoßdämpfer benutzt.

Anhand der EP 2 110 300 B1 ist ebenfalls eine Vorderradgabel für ein Motorrad bekannt geworden, bei der ein Doppelstangen-Stoßdämpfer als Dämpfungseinrichtung verwendet wird.

Anhand der US 8,276,719 B2 ist ein Dämpfer für ein Fahrrad bekannt geworden, bei der der Arbeitskolben an einer Kolbenstange angeordnet ist, welche innen hohl ausgebildet ist. Im Inneren der Kolbenstange ist eine Einstellstange mit einer Einstellnadel angeordnet, mit der die Strömung von Dämpfungsfluid von der Kompressionskammer in die Reboundkammer sowohl für die Druckbewegung als auch für die Zugbewegung eingestellt werden kann. Damit kann die Dämpfung sowohl für die Einfederbewegung als auch für die Ausfederbewegung eingestellt werden, aber nicht unabhängig voneinander.

Anhand der EP 1 473 483 B1 ist ein hydraulischer Stoßdämpfer bekannt geworden, der eine Kolbenstange aufweist, die innen hohl ausgebildet ist und in der ein Stellrohr und eine Stellstange angeordnet sind, mit denen zwei Stellelemente betätigt werden können.

Anhand der DE 41 03 356 C1 ist ein hydraulisch dämpfender Schwingungsdämpfer bekannt geworden, der eine innen hohl ausgebildete Kolbenstange aufweist mit einer darin axial verschiebbaren Steuerstange. Mit der Steuerstange können Bohrungen abgedeckt oder freigegeben werden, wodurch eine Veränderung der Dämpfungscharakteristik des Schwingungsdämpfers möglich ist.

Anhand der US 8,235,187 B2 ist ein hydraulischer Stoßdämpfer bekannt geworden, der ebenfalls eine hohle Kolbenstange aufweist, in der eine Stellstange angeordnet ist, an der sich eine Einstellnadel angeordnet befindet. Über eine Längsverschiebung der Einstellnadel kann die Dämpfungscharakteristik des Dämpfers bei der Reboundbewegung eingestellt werden. Die Verschiebung der Einstellnadel dient auch der Anpassung der Dämpfungscharakteristik bei der Einfederbewegung.

Anhand der DE 36 08 738 A1 ist ein Schwingungsdämpfer mit einem Zylinder und einem darin beweglich angeordneten Arbeitskolben bekannt geworden. Der Arbeitskolben ist an einer Kolbenstange angeordnet, die innen hohl ausgebildet ist und in der eine innen ebenfalls hohl ausgebildete Stellhülse angeordnet ist, über deren Drehbewegung ein erster Drehschieber betätigt werden kann, so dass im Drehschieber angeordnete Radialbohrungen mit einem Bypasskanal in Überdeckung gebracht werden können.

Im Innenraum der Stellhülse ist eine Stellstange angeordnet, über deren Drehbewegung ein zweiter Drehschieber betätigt werden kann und zwar so, dass im zweiten Drehschieber ausgebildete Radialbohrungen mit einem Bypasskanal in Überdeckung gebracht werden können. Auf diese Weise kann die Dämpfungscharakteristik des bekannten Schwingungsdämpfers für die Zugstufe und die Druckstufe unabhängig voneinander eingestellt werden.

Dem Drehschieber für die Zugstufendämpfung ist ein Rückschlagventil zugeordnet, welches bei der Ausfederbewegung aufgrund des im oberen Arbeitsraum herrschenden Drucks, der sich über einen radialen Bypasskanal fortsetzt, in Richtung nach innen öffnet, so dass das aus dem oberen Arbeitsraum verdrängte Dämpfungsfluid über einen axialen Durchlass in Richtung zu dem unteren Arbeitsraum strömen kann. Die Beaufschlagung des Rückschlagventils mit einem Öffnungsdruck von außen her macht es erforderlich, dass das Ventilglied des Rückschlagventils bei einem Nachlassen des Drucks wieder in seine Ursprungsposition verfährt, also in Richtung nach radial außen.

Das Ventilglied muss dazu aufgrund des mittig im Gehäuse des Rückschlagventils angeordneten Einlasses des axialen Bypasskanals eine große Radialbewegung durchführen, was wiederum dazu führt, dass es aus einem Werkstoff mit großem Elastizitätsmodul gefertigt werden muss, da es andernfalls die für die Rückkehrbewegung in die geschlossene Ausgangsposition notwendige Verfahroperation nicht zuverlässig ausführen kann. Diese Konfiguration wiederum führt dazu, dass das Ventilglied des Rückschlagventils erst bei einem sehr großen äußeren Öffnungsdruck anspricht und daher einer feinfühligen Einstellung der Zugstufendämpfung entgegenwirkt.

Das Ventilglied lässt nämlich aufgrund des großen Elastizitätsmoduls keine feinfühlige radial nach innen gerichtete Verlagerungsbewegung zu, sondern reagiert erst dann mit einer Radialbewegung, wenn der Druck außen schon erheblich angestiegen ist und reagiert dann mit einer Sprungantwort aufgrund des zu einem hohen Losbrechmoment führenden großen Elastizitätsmoduls. Dies macht deutlich, dass die gewünschte feinfühlige Einstellung der Zugstufendämpfung nicht gegeben ist. Außerdem sorgt die radial nach innen gerichtete Bewegung des Ventilglieds dafür, dass bei der Radialbewegung die Gefahr des Verkantens besteht, so dass eine Rückkehr des Ventilglieds in die radial außen liegende Ausgangsposition nur realisiert werden kann, wenn das Ventilglied steif ausgebildet ist, also eine hohe Rückstellkraft aufweist, was wiederum aufgrund des kleinen zur Verfügung stehenden Bauraum für das Ventilglied nur möglich ist, wenn das Ventilglied aus einem Werkstoff mit hohem Elastizitätsmodul ausgebildet ist, wie dies oben erwähnt worden ist.

Darüber hinaus weist der bekannte Schwingungsdämpfer mit den Drehschiebern den Nachteil einer aufwendigen und teuren Herstellung auf, da die Drehschieber mit einer Vielzahl von Radialbohrungen von unterschiedlichen Durchmessern ausgestattet sind, deren Herstellung mit einem Bearbeitungsautomaten den Einsatz eines Werkzeugwechslers erfordert, der bei den in der genannten Druckschrift angegebenen acht Bohrungen pro Drehschieber benötigten acht Bohrern mit unterschiedlichen Durchmessern entsprechend häufig zum Einsatz kommen muss, da pro Drehschieber jeder der acht Bohrer mindestens einmal zum Anfertigen der Bohrungen eingesetzt werden muss. Dadurch wird die für die Herstellung eines Drehschiebers benötigte Bearbeitungszeit deutlich gesteigert, wodurch die Herstellkosten ansteigen.

Ausgehend hiervon liegt der vorliegenden Erfindung die Aufgabe zu Grunde, einen Schwingungsdämpfer zu schaffen, der einerseits einfach ausgebildet ist und kostengünstig hergestellt werden kann und andererseits zuverlässig arbeitet, ohne dass die Gefahr besteht, dass beim Schwingungsdämpfer vorgesehene Rückschlagventile während des Betriebs hängen bleiben können.

Der zur Lösung dieser Aufgabe geschaffene Schwingungsdämpfer weist die im Anspruch 1 angegebenen Merkmale auf. Vorteilhafte Ausgestaltungen hiervon sind in den weiteren Ansprüchen beschrieben.

Die Erfindung sieht einen Schwingungsdämpfer vor mit einem zur Aufnahme von Dämpfungsfluid ausgebildeten Zylinder und einem darin axial beweglichen Arbeitskolben, der an einer mit einem Axialdurchlass ausgebildeten Kolbenstange geführt angeordnet ist und den Zylinderinnenraum in einen ersten und einen zweiten Arbeitsraum unterteilt und der Schwingungsdämpfer einen die Kolbenstange zumindest abschnittsweise axial durchsetzenden Fluidkommunikationsdurchlass für den Fluidaustausch zwischen den Arbeitsräumen und ein sich in den jeweiligen Arbeitsraum öffnendes Rückschlagventil aufweist und eine erste Verstelleinrichtung zur Einstellung der Druckstufendämpfung sowie eine zweite Verstelleinrichtung zur Einstellung der Zugstufendämpfung aufweist und eine Verstelleinrichtung mittels einer im Axialdurchlass der Kolbenstange angeordneten und mit einem Axialdurchlass versehenen Stellhülse verstellbar ist und die andere Verstelleinrichtung mittels einer in dem Axialdurchlass der Stellhülse angeordneten Stellstange verstellbar ist, wobei die erste Verstelleinrichtung eine in dem Fluidkommunikationsdurchlass axial verschiebbare erste Einstellnadel und die zweite Verstelleinrichtung eine in Axiallängsrichtung der Kolbenstange axial verschiebbare und mit einer Innenausnehmung ausgebildete zweite Einstellnadel ist.

Die Erfindung schafft also einen Schwingungsdämpfer, bei dem sowohl die Druckstufendämpfung als auch die Zugstufendämpfung unabhängig voneinander einstellbar ist und zwar mittels zwei axial verschiebbarer Einstellnadeln. Die Einstellnadeln haben den Vorteil, dass sie beispielsweise mit einem spanenden Drehvorgang hergestellt werden können und so kostengünstiger gefertigt werden können als dies bei den vorstehend genannten Drehschiebern der Fall ist. Darüber hinaus besitzen die Einstellnadeln den weiteren Vorteil, dass ihre Außenumfangsfläche an die jeweiligen Anforderungen der Einstellbarkeit der Dämpfung angepasst werden kann.

Bei den Drehschiebern kann die Einstellbarkeit nur über die Zahl der Bohrungen und deren Durchmesserabstufungen modifiziert werden. Die Zahl der Bohrungen ist an der Umfangsfläche der Drehschieber beschränkt, da ab einer bestimmten Zahl von Bohrungen die Außenwände der Bohrungen ineinander übergehen und somit eine feinere Einstellbarkeit nicht mehr gegeben ist.

Die Außenumfangsfläche der Einstellnadeln aber kann an beliebige Wünsche der Benutzer hinsichtlich der Einstellbarkeit der mit dem erfindungsgemäßen Schwingungsdämpfer ausgestatteten Fahrzeuge angepasst werden, d.h. in einer Querschnittsansicht der den Durchlass von Dämpfungsfluid beeinflussenden Hüllkurve oder Umhüllenden, die relativ zu einer den Durchlass von Dämpfungsfluid in einen Arbeitsraum und aus einem Arbeitsraum heraus gestattenden Durchlassöffnung verschoben wird. Der Nadelabschnitt, mit dem das Durchlassverhalten der Durchlassöffnung beeinflusst werden kann, kann also so angepasst werden, dass eine Axialverlagerung der Einstellnadel die Durchlassöffnung feinfühlig verändert.

So ist es beispielsweise möglich, auch mehrere Einstellnadeln mit unterschiedlichen Konfigurationen der den Fluiddurchlass steuernden Außenumfangsfläche bereitzustellen, die in einem Schwingungsdämpfer eingesetzt werden können. Unabhängig davon, dass mit dem erfindungsgemäßen Schwingungsdämpfer die Zugstufendämpfung und die Druckstufendämpfung unabhängig voneinander eingestellt werden kann, wird auf diese Weise auch noch die Möglichkeit geschaffen, beispielsweise für verschiedene Strecken, auf denen das mit dem erfindungsgemäßen Schwingungsdämpfer ausgestattete Fahrzeug benutzt wird, verschiedene Dämpfungssetups bereitzustellen, die vor Ort, also an der zu befahrenden Strecke eingestellt werden können, da es dazu lediglich notwendig ist, die im Innenraum der Kolbenstange angeordneten Einstellnadeln gegen andere, das wunschgemäße Dämpfungssetup bereitstellende Einstellnadeln auszutauschen.

Eine solche Änderung der Einstellbarkeit der Dämpfungscharakteristik ist mit dem mit Drehschiebern ausgestatteten bekannten Schwingungsdämpfer nicht in so rascher Zeit möglich, da hierzu der komplette Schwingungsdämpfer zur Demontage der Drehschieber zerlegt werden muss, während es bei dem erfindungsgemäßen Schwingungsdämpfer nur notwendig ist, die Einstellnadeln aus der Kolbenstange herauszuziehen und gegen andere Einstellnadeln auszutauschen.

Darüber hinaus führt die bei dem erfindungsgemäßen Schwingungsdämpfer mögliche Veränderung der Dämpfungscharakteristik durch eine Axialverschiebung der Einstellnadeln statt mit radial breit bauenden Drehschiebern dazu, dass der Schwingungsdämpfer im Durchmesservergleich mit dem bekannten Schwingungsdämpfer mit Drehschiebern kleiner baut, und dadurch auch weniger Bauraum benötigt, wodurch auch die Masse des Schwingungsdämpfers verringert wird, was beispielsweise bei einer Verwendung des erfindungsgemäßen Schwingungsdämpfers im Rennsportbereich von Vorteil ist.

Der Einsatz von Rückschlagventilen, die von innen her mit Druck beaufschlagt werden und sich in Richtung zum jeweiligen Arbeitsraum hin öffnen, führt auch dazu, dass die Rückschlagventile verglichen mit Rückschlagventilen, die von außen beaufschlagt werden und in Richtung nach radial innen hin öffnen, wie dies bei den bekannten Schwingungsdämpfer der Fall ist, dazu, dass die Ventileinrichtungen aus einem Werkstoff mit niedrigem Elastizitätsmodul gefertigt werden können, da sie vergleichsweise weich ausgestaltet werden können und ihre Dichtfunktion in der Schließrichtung dadurch bewerkstelligen, dass sie außen von Druck beaufschlagt werden und so von außen mit Druckkraft in Richtung zu einer Dichtfläche hin beaufschlagt werden.

Ihre Dichtfunktion führen sie also auch dann aus, wenn sie wenig steif ausgebildet sind und sie können so darauf ausgelegt werden, dass sie bei einem geringen Anstieg des Innendrucks bereits in Richtung zum Arbeitsraum hin öffnen und somit kein die Öffnung des Rückschlagventils negativ beeinflussendes hohes Losbrechmoment überwunden werden muss, um eine offene Stellung des Rückschlagventils zu erreichen. Dadurch wird eine wesentlich feinere Einstellbarkeit der Dämpfungsfunktion sowohl in Zugrichtung als auch in Druckrichtung erreicht, als dies bei dem bekannten Schwingungsdämpfer der Fall ist.

Die Erfindung sieht nach einer Weiterbildung vor, dass mindestens eine Einstellnadel am Außenumfang zur Veränderung des eine Durchlassöffnung durchsetzenden Dämpfungsfluidmassenstroms ausgebildet ist, die einen Axiallängsdurchlass der Kolbenstange und einen Arbeitsraum fluidisch verbindet.

Ein Fluidaustausch zwischen den Arbeitsräumen, der von den Einstellnadeln beeinflussbar ist, findet über den in der Kolbenstange ausgebildeten hohlen Innenraum statt, der auch zur Aufnahme der beiden Einstellnadeln ausgebildet ist. Die Einstellnadeln besitzen zur Drosselung und damit Beeinflussung des Dämpfungsfluidmassenstroms des durch die Kolbenstange hindurchtretenden Dämpfungsfluids eine Konfiguration am Außenumfang, die dafür sorgt, dass durch die Veränderung der Axialposition der Einstellnadeln in dem Aufnahmeraum in der Kolbenstange relativ zu Durchlassöffnungen für den Durchtritt von Dämpfungsfluid eine feinfühlige Einstellung des Dämpfungsverhaltens sowohl im Zugrichtung als auch im Druckrichtung des Schwingungsdämpfers möglich ist.

Es ist dabei nach einer Weiterbildung der Erfindung vorgesehen, dass die zweite Einstellnadel in dem Axialdurchlass der Kolbenstange axial verschiebbar angeordnet ist, während die erste Einstellnadel in dem die Kolbenstange zumindest abschnittsweise axial durchsetzenden Fluidkommunikationsdurchlass angeordnet sein kann.

Es ist nach einer Weiterbildung der Erfindung auch vorgesehen, dass die erste Einstellnadel mittels der im Axialdurchlass der Stellhülse angeordneten Stellstange axial verschiebbar ist, dass also eine axiale Lageveränderung der Stellstange in der Stellhülse dafür sorgt, dass die erste Einstellnadel relativ zu einem Fluiddurchlass für Dämpfungsfluid hinsichtlich ihrer Lage verändert werden kann und somit eine die Strömung von Dämpfungsfluid zum Fluiddurchlass beeinflussende Querschnittsfläche zwischen der ersten Einstellnadel und einer die Einstellnadel aufnehmende Einrichtung, bei der es sich um den Fluidkommunikationsdurchlass handeln kann, hinsichtlich der für den Durchtritt von Dämpfungsfluid freigebbaren Durchtrittsfläche verändert werden kann.

Es ist nach einer Weiterbildung der Erfindung vorgesehen, dass sich die zweite Einstellnadel über eine Federeinrichtung an einem Hülsenkörper, der Teil der Kolbenstange sein kann, abstützt und mittels der Stellhülse gegen die Wirkung einer Schraubenfeder axial verlagerbar ist. Die zweite Einstellnadel kann beispielsweise dem in Zugrichtung wirkenden Arbeitsraum des Schwingungsdämpfers zugeordnet sein und über ihre Axialverlagerung kann somit die Zugdämpfung oder Zugstufendämpfung des erfindungsgemäßen Schwingungsdämpfers beeinflusst werden.

Es ist nach einer Weiterbildung der Erfindung auch vorgesehen, dass sich die erste Einstellnadel über eine Federeinrichtung gegen einen Hülsenkörper, der Teil der Kolbenstange sein kann, abstützt. Die erste Einstellnadel kann dabei beispielsweise dem in Druckrichtung wirkenden Arbeitsraum des Schwingungsdämpfers zugeordnet sein und über eine Axialverlagerung der ersten Einstellnadel kann somit die Druckdämpfung oder Druckstufendämpfung des erfindungsgemäßen Schwingungsdämpfers beeinflusst werden.

Es ist nach einer Weiterbildung der Erfindung auch vorgesehen, dass die Kolbenstange im Bereich des Fluidkommunikationsdurchlasses mindestens zwei im Abstand zueinander angeordnete Durchlässe aufweist, die sich vom Fluidkommunikationsdurchlass bis in den jeweiligen Arbeitsraum erstrecken und jeweils mit einer sich in Richtung zu dem jeweiligen Arbeitsraum zur Fluidströmung bei Beaufschlagung mit in Richtung nach außen wirkendem Druck von vorbestimmter Größe öffnenden Ventileinrichtung versehen sind.

Bei der jeweiligen Ventileinrichtung hat kann es sich um das vorstehend bereits erwähnte Rückschlagventil handeln, welches eine Strömung an Dämpfungsfluid in Richtung zum jeweiligen Arbeitsraum hin ermöglicht, aber ein Abströmen von Dämpfungsfluid über das Rückschlagventil verhindert.

Nach einer Weiterbildung der Erfindung kann es sich bei der Ventileinrichtung um einen einfachen elastischen Ringkörper handeln, der mit radial nach innen wirkender Vorspannung in einer Umlaufnut der Kolbenstange oder einem an der Kolbenstange angeordneten Hülsenkörper angeordnet ist. Es kann sich bei der Ventileinrichtung auch um einen rohrstückförmigen elastischen Körper handeln, der ebenfalls mit radial nach innen wirkender Vorspannung in einer Umlaufnut der Kolbenstange oder einem Hülsenkörper angeordnet ist. Beide Varianten sind ausgesprochen kostengünstig herzustellen und einfach in der Umlaufnut anzuordnen, ohne dass hierfür kostenaufwändige Werkzeuge benötigt werden.

Nach einer Weiterbildung der Erfindung ist es auch möglich, dass die Ventileinrichtung ein rohrstückförmiger Körper ist, der beispielsweise auch längs geschlitzt ausgebildet sein kann und mit radial nach innen wirkender Vorspannung in einer Umlaufnut der Kolbenstange oder einem mit der Kolbenstange in Wirkverbindung gekoppelter Körper angeordnet ist. Bei einer solchen Ausführungsform kann die Ventileinrichtung beispielsweise ein geschlitzter, aus einem streifenförmiger Körper aus Federstahl gefertigter Körper sein, der an der Kolbenstange beispielsweise mit einem Sicherungsstift gegen Verdrehen fixiert angeordnet werden kann.

Bei allen Varianten der Ventileinrichtung führt ein Anstieg des Innendrucks in dem Fluidkommunikationsdurchlass dazu, dass sich die Ventileinrichtung entgegen der Wirkung der Vorspannung radial nach außen aufweitet und somit einen unidirektionalen Fluidstrom aus dem Fluidkommunikationsdurchlass in Richtung des Arbeitsraums zulässt.

Die Erfindung sieht nach einer Weiterbildung auch vor, dass der Schwingungsdämpfer einen an der Zylinderinnenwand dichtend angeordneten Trennkolben aufweist, der zwischen einem Arbeitsraum und einem Aufnahmeraum für Dämpfungsfluid angeordnet ist, welches von der in einen Arbeitsraum eintauchenden Kolbenstange verschoben wird. Bei dem Trennkolben kann es sich auch um eine Dichtscheibe handeln, die an der Zylinderinnenwand axial festgelegt ist.

Wenn die Kolbenstange in den Zylinder eintaucht, wird von der Kolbenstange Dämpfungsfluid verschoben, das in den durch den Trennkolben oder die Dichtscheibe vom Arbeitsraum abgetrennten Aufnahmeraum verschoben wird, was dazu führt, dass sowohl in dem Arbeitsraum für die Druckstufe als auch in dem Arbeitsraum für die Zugstufe der Innendruck geringfügig ansteigt. Bei der Ausfederbewegung kann dann das verschobene Dämpfungsfluid aus dem Aufnahmeraum über ein Rückschlagventil wieder zurückströmen.

Die Erfindung sieht nach einer Weiterbildung auch vor, dass der Schwingungsdämpfer einen fluidisch vom mit Dämpfungsfluid gefüllten Innenraum des Zylinders getrennten und mit Gas gefüllten Druckraum aufweist, der zur Druckbeaufschlagung des Dämpfungsfluids im Arbeitsraum ausgebildet ist. Bei dem Druckraum kann es sich beispielsweise um einen an einem Endbereich des Zylinders angeordneten und mit unter Druck gesetztem Stickstoff gefüllten Raum handeln.

Wie es vorstehend bereits ausgeführt wurde, ermöglicht es der erfindungsgemäße Schwingungsdämpfer, die Druckstufendämpfung und die Zugstufendämpfung unabhängig voneinander einzustellen, wobei der Benutzer des mit dem erfindungsgemäßen Schwingungsdämpfer ausgestatteten Fahrzeugs keinerlei Werkzeug benötigt.

Zur einfachen Verstellung der Dämpfungscharakteristika ist es nach einer Weiterbildung der Erfindung vorgesehen, dass der Schwingungsdämpfer ein jeweils mit der Stellhülse und der Stellstange in Wirkverbindung angeordnetes und außerhalb des Zylinders vorgesehenes Stellelement aufweist, dessen Betätigung eine Axialverlagerung der Stellhülse und der Stellstange bewirkt.

Die beiden Stellelemente können vom Benutzer manuell betätigt werden, es kann sich beispielsweise um ein jeweils der Stellhülse und der Stellstange zugeordnetes Rändelrad handeln, über deren jeweilige Verdrehbewegung der Benutzer eine Axialverlagerung der Stellhülse und der Stellstange herbeiführen kann, was zu einer axialen Verlagerung der ersten und zweiten Einstellnadel im Inneren des Zylinders führt und damit zu einer Veränderung des für das Dämpfungsfluid beim Einfedervorgang und beim Ausfedervorgang zur Verfügung stehenden Durchtrittsquerschnitts und damit des Drosselspalts. Nach einer Alternative hierzu ist es auch möglich, dass die Stellelemente in der Form von Einstellschrauben ausgebildet sind, die mittels eines Werkzeugs in der Form beispielsweise eines Schraubendrehers betätigt werden können, und die Einstellschrauben die Stellhülse und die Stellstange betätigen.

Die Erfindung sieht nach einer Weiterbildung vor, dass die erste Einstellnadel einen zylindrischen Führungsabschnitt aufweist, der sich innerhalb des Fluidkommunikationsabschnitts angeordnet befindet. Der Führungsabschnitt kann in eine Innenausnehmung der zweiten Einstellnadel eintauchen und wird dort axial geführt. Der Führungsabschnitt weist einen Außendurchmesser auf, der kleiner ist als der Innendurchmesser des Fluidkommunikationsabschnitts, so dass der Durchtritt von Dämpfungsfluid entlang des so gebildeten Spaltraums möglich ist.

Es ist nach einer Weiterbildung der Erfindung auch vorgesehen, dass die erste Einstellnadel einen zum Führungsabschnitt beabstandeten Bereich aufweist, der einen größeren Durchmesser als der Führungsabschnitt aufweist und sich in Axiallängsrichtung der Einstellnadel vom Führungsabschnitt aus betrachtet im Querschnitt verjüngt. Es bedeutet dies mit anderen Worten, dass die erste Einstellnadel einen Bereich aufweist, der zur Beeinflussung des für den Durchtritt von Dämpfungsfluid zwischen dem Innendurchmesser des Fluidkommunikationsabschnitts und dem Außendurchmesser der ersten Einstellnadel vorgesehenen Durchlassquerschnitts ausgebildet ist.

Zu diesem Zweck kann dieser Einstellbereich der ersten Einstellnadel eine Außenkontur aufweisen, die in Axiallängsrichtung der Einstellnadel vom Führungsabschnitt betrachtet sich verjüngend ausgebildet ist, also einen zunächst größeren Durchmesser aufweist, der dann in Richtung der Axiallängsrichtung vom Führungsabschnitt aus betrachtet im Querschnitt geringer wird und in einem kleineren Durchmesser als den größeren Durchmesser endet.

Wird die erste Einstellnadel in dem Fluidkommunikationsabschnitt axial verschoben, von dem aus ein Flüssigkeitsdurchlass in einen Arbeitsraum für beispielsweise die Einfederbewegung des Schwingungsdämpfers mündet, so gelangt der Einstellabschnitt in den Bereich des Flüssigkeitsdurchlasses und kann den für den Durchtritt von Dämpfungsfluid vorgesehenen Spaltraum vergrößern oder verkleinern, je nachdem in welche Richtung die erste Einstellnadel axial verlagert wird. Dadurch kann die Dämpfungsarbeit für die Einfederbewegung des Schwingungsdämpfers beeinflusst werden und damit die Dämpfungscharakteristik des Schwingungsdämpfers für die Druckstufe.

Es ist nach einer Weiterbildung der Erfindung auch vorgesehen, dass die erste Einstellnadel einen Abschnitt aufweist, der in Axiallängsrichtung der Einstellnadel betrachtet zwischen dem sich verjüngenden Abschnitt und dem Führungsabschnitt angeordnet ist und sich im Querschnitt in Richtung radial nach außen erweitert. Dieser sich erweiternde Abschnitt geht also in den Einstellabschnitt über und kann bereits einen Teil des Einstellabschnitts bilden. Eine Axialverlagerung der ersten Einstellnadel führt daher zu einer feinfühligen Veränderung der Dämpfungscharakteristik der Druckstufe.

Zur feinfühligen Veränderung der Dämpfungscharakteristik der Druckstufe ist es nach einer Weiterbildung der Erfindung vorgesehen, dass der sich verjüngende Abschnitt entlang der Axiallängsrichtung der ersten Einstellnadel Abschnitte mit unterschiedlichen Durchmessern aufweist. Auf diese Weise führt eine axiale Verschiebung der ersten Einstellnadel zu einer feinfühligen Veränderung der für den Durchtritt von Dämpfungsfluid in den Arbeitsraum über das Rückschlagventil zur Verfügung stehenden Spaltraums.

Es ist dabei nach einer Weiterbildung der Erfindung auch vorgesehen, dass der sich verjüngende Abschnitt entlang der Axiallängsrichtung der ersten Einstellnadel Abschnitte mit unterschiedlichen Durchmessern aufweist und sich der Durchmesser im Bereich zwischen den Abschnitten linear verändert. Auch kann der sich verjüngende Abschnitt entlang der Axiallängsrichtung der ersten Einstellnadel zwei Abschnitte mit unterschiedlichen Durchmessern aufweisen und sich der Querschnitt zwischen den Abschnitten progressiv oder degressiv verändern.

Auf diese Weise ist eine Veränderung der Dämpfungscharakteristik des Schwingungsdämpfers auch durch eine Anpassung der Umhüllenden des Einstellabschnitts möglich.

Die Erfindung sieht nach einer Weiterbildung auch vor, dass die zweite Einstellnadel einen zylindrischen Führungsabschnitt aufweist, der sich in einem Abschnitt der Kolbenstange oder einem Führungsabschnitt, beispielsweise einer Führungshülse, die Teil der Kolbenstange sein kann, angeordnet befindet und im Abstand zu einem zur Veränderung eines Durchströmungsquerschnitts für Dämpfungsfluid ausgebildeten Nadelabschnitt der Einstellnadel angeordnet ist.

Mit dem Führungsabschnitt wird die zweite Einstellnadel axial geführt und mit dem Nadelabschnitt kann der zur Durchströmung von Dämpfungsfluid freigebbare Spaltraum zwischen der Außenkontur des Nadelabschnitts und der Innenkontur eines zum Durchtritt von Dämpfungsfluid vorgesehenen Bereichs der Kolbenstange beeinflusst werden und somit die Dämpfungsarbeit der Zugstufe.

Es ist dabei nach einer Weiterbildung der Erfindung vorgesehen, dass der Nadelabschnitt in Axiallängsrichtung der Einstellnadel vom Führungsabschnitt aus betrachtet sich verjüngend ausgebildet ist. Der Nadelabschnitt kann durch eine Axiallängsverlagerungsbewegung der zweiten Einstellnadel in den Bereich einer Durchlassöffnung aus dem zweiten Arbeitsraum in den zum Durchtritt von Dämpfungsfluid vorgesehenen Bereich der Kolbenstange gebracht werden, wodurch der Ringspaltraum zwischen dem Nadelabschnitt und dem zum Durchtritt von Dämpfungsfluid vorgesehenen Bereich der Kolbenstange verändert werden kann und somit der Drosselquerschnitt modifiziert werden kann.

Es ist nach einer Weiterbildung der Erfindung auch vorgesehen, dass der Nadelabschnitt entlang der Axiallängsrichtung der zweiten Einstellnadel Abschnitte mit unterschiedlichen Durchmessern aufweist. Der Durchmesser des Nadelabschnitts kann sich dabei im Bereich zwischen den Abschnitten linear verändern.

Nach einer Weiterbildung der Erfindung ist es auch vorgesehen, dass der Nadelabschnitt entlang der Axiallängsrichtung der zweiten Einstellnadel zwei Abschnitte mit unterschiedlichen Durchmessern aufweist und sich der Querschnitt zwischen den Abschnitten progressiv oder degressiv verändert. Damit kann auch die Umhüllende des Nadelabschnitts zur Beeinflussung der Dämpfungscharakteristik der Zugstufe so modifiziert werden, dass die Dämpfungskraft bei der Ausfederbewegung feinfühlig modifiziert werden kann.

Die Erfindung wird im folgenden anhand der Zeichnung näher erläutert. Diese zeigt in:
Fig. 1 eine Längsschnittdarstellung des erfindungsgemäßen Schwingungsdämpfers nach einer Ausführungsform gemäß der vorliegenden Erfindung;
Fig. 2 eine vergrößerte Darstellung der Einzelheit "A" nach Fig. 1 der Zeichnung;
Fig. 3 eine Darstellung ähnlich Fig. 1 mit einer Einzelheit "B", die dargestellt ist in
Fig. 4 und zwar in einer vergrößerten Schnittdarstellung;
Fig. 5 eine Einzelheit eines Rückschlagventils nach einer modifizierten Ausführungsform in einer Schnittdarstellung;
Fig. 6 eine Darstellung ähnlich Fig. 5, die eine modifizierte Ausführungsform eines Rückschlagventils zeigt;
Fig. 7 eine Darstellung einer ersten Einstellnadel eines Schwingungsdämpfers nach einer Ausführungsform gemäß der vorliegenden Erfindung;
Fig. 8 eine Schnittdarstellung einer zweiten Einstellnadel eines Schwingungsdämpfers nach einer Ausführungsform gemäß der vorliegenden Erfindung; und
Fig. 9 eine Schnittdarstellung eines Schwingungsdämpfers nach einer weiteren Ausführungsform gemäß der vorliegenden Erfindung.

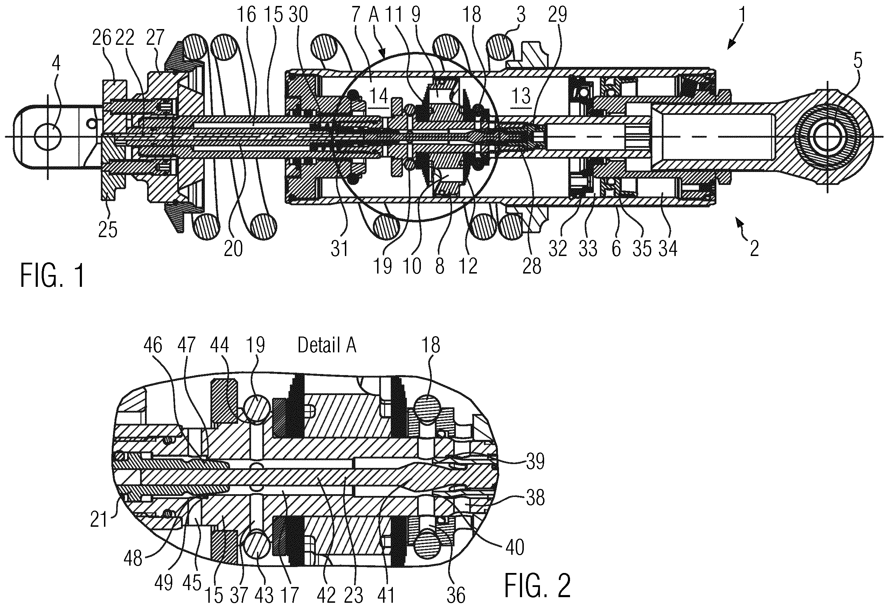

Fig. 1 der Zeichnung zeigt eine Längsschnittdarstellung eines Schwingungsdämpfers 1 gemäß einer Ausführungsform nach der vorliegenden Erfindung, die zur Anordnung an einem nicht näher dargestellten Motorrad vorgesehen ist und zwar als Schwingungsdämpfer für das Heck des Motorrads.

Bei der dargestellten Ausführungsform ist der Schwingungsdämpfer Teil einer Feder-Dämpferanordnung oder Federbeins 2, mit dem sich die das Hinterrad des Motorrads führende nicht näher dargestellte Schwinge am Rahmen des Motorrads abstützt. Zu diesem Zweck weist das Federbein 2 eine Hauptfeder 3 auf, deren Schwingungsbewegung über den Schwingungsdämpfer 1 gedämpft wird. Das Federbein 2 kann sich dabei über ein Federbeinauge 4 an der Schwinge oder einem Umlenkhebel abstützen und über ein zweites Federbeinauge 5 am Rahmen.

Der Schwingungsdämpfer 1 weist einen als Hohlzylinder oder Zylinder 6 ausgebildeten Grundkörper auf, der zur Befüllung mit Dämpfungsfluid vorgesehen ist. Im Innenraum 7 des Zylinders 6 befindet sich ein Arbeitskolben oder Kolben 8 angeordnet, der Fluiddurchlässe 9, 10 aufweist, die mittels Ventileinrichtungen 11, 12 in der Form von beispielsweise Federscheiben oder shim stacks oder eines mit einer Konusfläche als Dichtfläche ausgebildeten Kolbenventils ausgebildet sind. Das Federscheibenpaket 11 dient dabei der Freigabe einer Fluidströmung vom ersten Arbeitsraum 13 in den zweiten Arbeitsraum 14, während das Federscheibenpaket 12 der Freigabe eines Fluidstroms vom Arbeitsraum 14 in den Arbeitsraum 13 dient.

Der erste Arbeitsraum 13 dient als Arbeitsraum bei der Einfederbewegung des Federbeins 2 und der zweite Arbeitsraum 14 dient als Arbeitsraum bei der Ausfederbewegung des Federbeins 2. Der Kolben 8 ist an einer Kolbenstange 15 angeordnet, die innen hohl ausgebildet ist und einen Innenraum 16 aufweist. In der Kolbenstange 15 ist ein näher anhand von Fig. 2 ersichtlicher Fluidkommunikationsdurchlass 17 angeordnet, über den es zwischen den beiden Arbeitsräumen 13, 14 zu einem Austausch von Dämpfungsfluid kommen kann.

In dem ersten Arbeitsraum 13 befindet sich ein erstes Rückschlagventil 18 an der Kolbenstange 5 angeordnet und im zweiten Arbeitsraum 14 ein zweites Rückschlagventil 19, wobei sich beide Rückschlagventile 18, 19 in den jeweiligen Arbeitsraum hin öffnen.

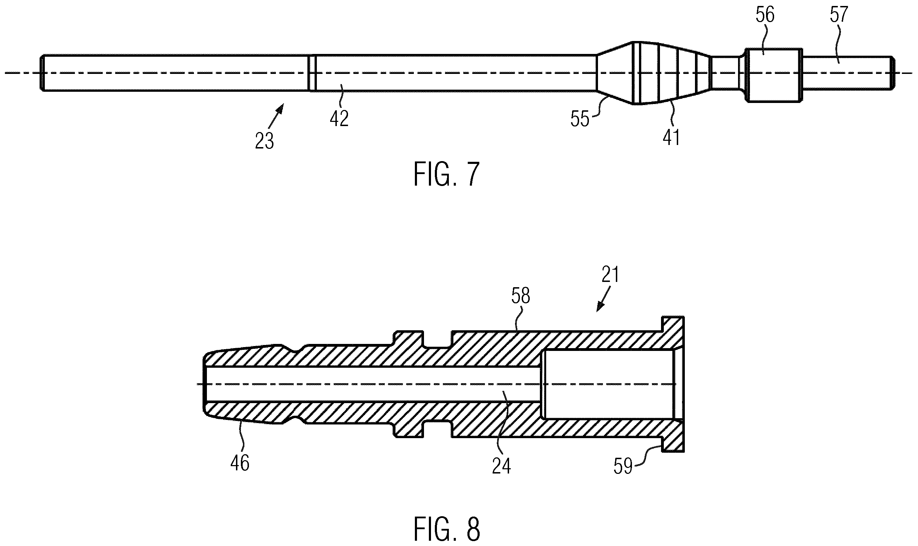

Im Innenraum 16 der Kolbenstange 15 ist eine Stellhülse 20 angeordnet, mit der eine näher anhand von Fig. 8 der Zeichnung ersichtliche zweite Einstellnadel 21 entlang der Axiallängsrichtung der Kolbenstange 15 verlagert werden kann. Die Stellhülse 20 ist innen ebenfalls mit einer Innenausnehmung 24 hohl ausgebildet und zwar zur Aufnahme einer Stellstange 22, die zur Betätigung einer im Fluidkommunikationsdurchlass 17 angeordneten ersten Einstellnadel 23 vorgesehen ist.

Die Stellhülse 20 und die Stellstange 22 erstrecken sich durch die hohle Kolbenstange 15 hindurch in Richtung aus dem Innenraum 7 des Zylinders 6 heraus und zwar bis zu Stellelementen 25, 26, die in der Form von Rändelscheiben vorgesehen sind, die also außerhalb des Schwingungsdämpfers 1 angeordnet sind und von einem Benutzer ohne die Zuhilfenahme von Werkzeug in eine Drehbewegung versetzt werden können.

Die Stellelemente 25, 26 sind in einem Verschlussdeckel 27 drehbar gelagert und befinden sich in Wirkverbindung mit der Stellhülse 20 beziehungsweise der Stellstange 22 angeordnet. Eine Drehbewegung des Stellelements 25 führt zu einer Axialverlagerung der Stellstange 22, die sich an der ersten Einstellnadel 23 abstützt, die sich wiederum über eine Federeinrichtung 28 in der Form einer Schraubendruckfeder an einem Hülsenkörper 29 abstützt. Über eine Drehbetätigung des Stellelements 25 kann also die erste Einstellnadel 23 entgegen der Wirkung der Federeinrichtung 28 in der Zeichnungsebene in Richtung nach rechts bewegt werden und einer Drehbetätigung des Stellelements 25 in die entgegengesetzte Drehrichtung sorgt über die Federeinrichtung 28 dafür, dass die erste Einstellnadel 23 in der Zeichnungsebene in Richtung nach links verlagert wird. Zur Axialverlagerung der Stellhülse 20 und der Stellstange 22 in der Zeichnungsebene in Richtung nach rechts werden diese Bauteile durch die Stellelemente 25, 26 mit Druck beaufschlagt, es kommt also zu einer Verschraubungsbewegung der Stellelemente an jeweiligen Gewindeelementen und damit zu einer Vorschubbewegung der Stellelemente. Diese drücken auf die Stellhülse 20 und die Stellstange 22 und verschieben diese. Eine Drehbewegung der Stellelemente 25, 26 in die entgegengesetzte Richtung führt über die Federeinrichtungen 28, 30 zu einer Verschiebung der Stellhülse 20 und der Stellstange 22 in der Zeichnungsebene in Richtung nach links und damit auch zu einer Bewegung der Einstellnadeln 21, 23 in der Zeichnungsebene in Richtung nach links.

Eine Drehbetätigung des Stellelements 26 sorgt für eine Axialverlagerung der Stellhülse 20 im Innenraum 16 der Kolbenstange 15, die Stellhülse 20 stützt sich an einem Bund der zweiten Einstellnadel 21 ab, die sich wiederum über eine Federeinrichtung 30 an einem Hülsenkörper 31 abstützt.

Eine Drehbetätigung des Stellelements 26 in eine Drehrichtung sorgt also dafür, dass sich die Stellhülse 20 und damit die zweite Einstellnadel 21 in der Zeichnungsebene in Richtung nach rechts verlagert, während die Drehbetätigung des Stellelements 26 in die andere Drehrichtung dafür sorgt, dass die Federeinrichtung 30 die Stellhülse 20 und damit zweite Einstellnadel 21 in der Zeichnungsebene in Richtung nach links verlagert. Beide Stellelemente 25, 26 können über jeweils eine Rasterung in der Form beispielsweise einer mit einer Feder belasteten Kugel, die in am Außenumfang der kreisscheibenförmigen Stellelemente ausgebildeten Einbuchtungen eingreifen, gegen ein unbeabsichtigtes Verdrehen gesichert werden.

Eine Beaufschlagung der Stellelemente vom Benutzer mit Drehkraft sorgt dafür, dass die federbelastete Kugel aus der Einbuchtung ausrückt und nach einem vorbestimmten Drehwinkel in eine nächste Einbuchtung eingreift, wodurch es dem Benutzer auch ermöglicht wird, die Zahl der bei der Drehbetätigung der Stellelemente überstrichenen Einbuchtungen mitzuzählen und somit einen Anhaltspunkt für den von ihm vorgenommenen Verstellweg zu bekommen.

Wie es weiters anhand von Fig. 1 der Zeichnung ersichtlich ist, weist der Schwingungsdämpfer 1 einen benachbart zum ersten Arbeitsraum 13 angeordneten Trennkolben oder Dichtscheibe 32 auf, der einen Aufnahmeraum 33 für von der Kolbenstange 15 verschobenes Dämpfungsfluid ausbildet. In der Zeichnungsebene rechts vom Aufnahmeraum 34 ist ein Druckraum 34 ausgebildet, der bei der dargestellten Ausführungsform mit Stickstoff gefüllt ist und zur Druckbeaufschlagung des Dämpfungsfluids in den Arbeitsräumen 13, 14 dient. Der Druckraum 34 wird von einem weiteren Trennkolben 34 gegen den Aufnahmeraum 33 getrennt, wobei der Trennkolben 34 im Zylinder 1 axial beweglich angeordnet ist, während der Trennkolben 32 im Zylinder 1 axial unverschieblich angeordnet ist, und somit auch die Funktion einer Gegendrucksscheibe erfüllt.

Wie es sich anhand von Fig. 2 der Zeichnung ergibt, besitzt die Kolbenstange 15 im Bereich des Fluidkommunikationsdurchlasses 17 einen ersten Durchlass 36 in Richtung zum ersten Arbeitsraum 13 und einen zweiten Durchlass 37 in Richtung zum zweiten Arbeitsraum 14. Beide Durchlässe 36, 37 werden in Richtung aus den Arbeitsräumen 13, 14 heraus von den Rückschlagventilen 18, 19 versperrt, so dass es jeweils nur zu einer unidirektionalen Fluidströmung kommen kann.

Wird das Federbeinauge 4 in Richtung auf Druck betätigt, dann wirkt der Arbeitsraum 13 als Kompressionskammer und das Rückschlagventil 18 versperrt eine Fluidströmung durch den ersten Durchlass 36 in Richtung zum Fluidkommunikationsdurchlass 37. Das Arbeitsfluid in der Form des Dämpfungsfluids kann über einen dritten Durchlass 38 in Richtung zum Fluidkommunikationsdurchlass 17 strömen und gelangt dabei an einen Ringspaltraum 39, der im Fluidkommunikationsdurchlass 17 ausgebildet wird zwischen einer Stirnfläche 40 des Hülsenkörpers 29 und einer bei der dargestellten Ausführungsform der ersten Einstellnadel 23 linsenförmigen Erweiterung 41, die sich in Axiallängsrichtung der ersten Einstellnadel 23 beabstandet zu einem zylindrischen Führungsabschnitt 42 der ersten Einstellnadel angeordnet befindet und sich daher in Axiallängsrichtung der Einstellnadel verjüngt.

Über eine Längsverschiebung der ersten Einstellnadel 23 und damit des Abschnitts 41 kann der Ringspaltraum 39 vergrößert oder verkleinert werden, wodurch die an dem so gebildeten Drosselspalt verrichtete Dämpfungsarbeit verändert werden kann und zwar sowohl in Richtung einer Erhöhung der Dämpfungsarbeit als auch in Richtung einer Verringerung der Dämpfungsarbeit.

Das über den dritten Durchlass 38 strömende Dämpfungsfluid strömt entlang des Fluidkommunikationsdurchlasses 17 und gelangt in den zweiten Durchlass 37, der in Richtung nach radial innen von dem als Ringkörper 43 ausgebildeten zweiten Rückschlagventil 19 verschlossen ist. Da der Druck in dem Fluidkommunikationsdurchlass 17 höher ist als der Druck in dem zweiten Arbeitsraum 14, wird der Ringkörper 43 in Richtung nach radial außen aus seinem Sitz in der Umlaufnut 44 herausgedrückt und das Dämpfungsfluid kann sich in den zweiten Arbeitsraum 14 entspannen.

Kommt es dahingegen zu einer Ausfederbewegung des Federbeinauges 4, dann steigt der Druck in dem zweiten Arbeitsraum 14 an und darin befindliches Dämpfungsfluid kann über einen vierten Durchlass 45 in Richtung zum Fluidkommunikationsdurchlass 17 strömen. Im Bereich des vierten Durchlasses 45 befindet sich die zweite Einstellnadel 21 mit einem zur Veränderung eines Durchströmungsquerschnitts 48 ausgebildeten Nadelabschnitt 46 angeordnet.

Der Durchströmungsquerschnitt 48 bildet einen Ringspaltraum 47 aus, der zwischen dem Außenumfang des Nadelabschnitts 46 und einem Bund 49 ausgebildet wird. Über eine Axialverlagerung der ersten Einstellnadel 21 und damit des Nadelabschnitts 46 kann der Durchströmungsquerschnitt 48 vergrößert und verkleinert werden, so dass sie so gebildete Drosselwirkung vergrößert oder verkleinert werden kann, um die Dämpfungswirkung in Zugrichtung zu erhöhen oder zu verringern.

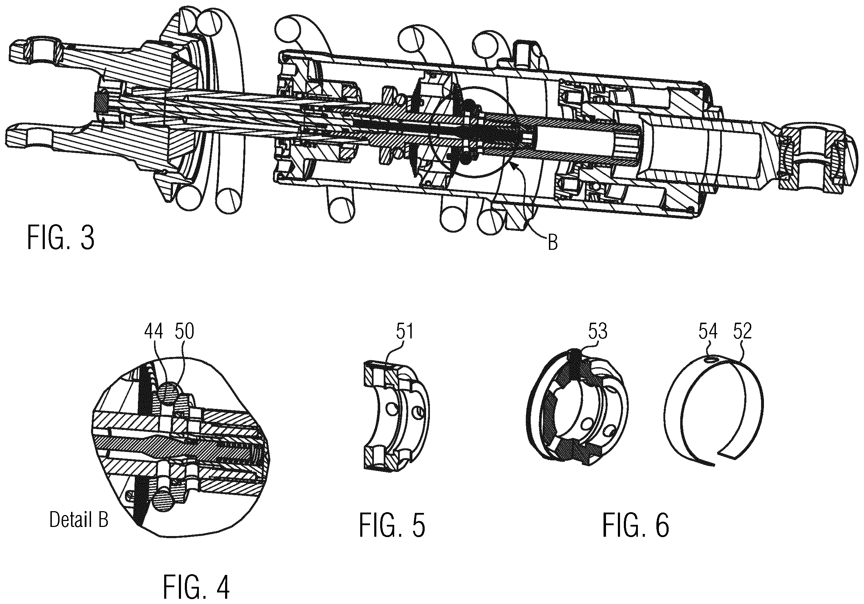

Fig. 3 der Zeichnung zeigt eine perspektivische Darstellung mit einer Einzelheit "B", die in den Figuren 4 bis 6 in unterschiedlichen Ausführungsformen dargestellt ist.

Die Einzelheit "B" dient der Erläuterung möglicher Ausführungsformen des Rückschlagventils 18, welches nach einer bevorzugten Ausführungsform identisch ausgebildet ist mit dem Rückschlagventil 19, obwohl auch verschiedene Ausführungsformen von Rückschlagventilen, wie sie nachstehend noch näher erläutert werden, auch bei einer Ausführungsform des Schwingungsdämpfers 1 zum Einsatz kommen können.

Wie es anhand von Fig. 4 der Zeichnung ersichtlich ist, ist nach einer einfachen und sehr kostengünstigen Ausführungsform das Rückschlagventil als in der Umlaufnut 44 angeordneter O-Ring 50 ausgebildet. Der O-Ring 50 liegt in der Umlaufnut 44 dichtend an und sorgt dafür, dass aus dem Arbeitsraum 13 kein Dämpfungsfluid über das Rückschlagventil in Richtung zum Fluidkommunikationsdurchlass 17 hindurchströmen kann. Auch beim Einfedervorgang bleibt das Rückschlagventil 18 mit seinem O-Ring 50 geschlossen und verhindert ein Austreten von Dämpfungsfluid aus dem Arbeitsraum 13 in den Fluidkommunikationsdurchlass 17.

Findet hingegen ein Ausfedervorgang statt, dann steigt der Arbeitsdruck in dem Arbeitsraum 14 an und es kommt zu einem Strömen von Dämpfungsfluid aus dem Arbeitsraum 14 über den Fluidkommunikationsdurchlass 17 in Richtung zu dem Rückschlagventil 18, der Innendruck im Fluidkommunikationsdurchlass 17 steigt an, der O-Ring 50 wird in Richtung nach radial außen aus der Umlaufnut 44 heraus gedrückt und es kann zu einer Fluidströmung über das in Richtung zum Arbeitsraum 13 geöffnete Rückschlagventil 18 kommen.

In ähnlicher Weise arbeitet das Rückschlagventil 19, welches ein Ausströmen von Dämpfungsfluid aus dem Arbeitsraum 14 in Richtung zum Fluidkommunikationsdurchlass 17 verhindert und beim Einfedervorgang eine Fluidströmung aus dem Arbeitsraum 13 in Richtung zum Arbeitsraum 14 ermöglicht.

Fig. 5 der Zeichnung zeigt eine modifizierte Ausführungsform des Rückschlagventils 18, 19. Bei dieser Ausführungsform dient als Ventileinrichtung ein rohrstückförmiger elastischer Körper 51, der mit radial nach innen wirkender Vorspannung in der Umlaufnut 44 der Kolbenstange 15 angeordnet ist. Die Funktion des so gebildeten Rückschlagventils entspricht der Funktion des mit einem O-Ring 50 gebildeten Rückschlagventils, wobei das mit dem Körper 51 gebildete Rückschlagventil so ausgestaltet werden kann, dass es bei einem Innendruck im Fluidkommunikationsdurchlass 17 öffnet, der niedriger ist als der Öffnungsdruck für das mit einem O-Ring 50 ausgebildete Rückschlagventil 18, 19.

Fig. 6 der Zeichnung zeigt eine weitere modifizierte Ausführungsform eines Rückschlagventils 18, 19. Bei dieser Ausführungsform dient als Ventileinrichtung ganz allgemein ein rohrstückförmiger Körper, der mit radial nach innen wirkender Vorspannung in der Umlaufnut 44 der Kolbenstange 15 angeordnet ist. Der Körper kann ein aus Federstahl gebildeter geschlitzter Ringkörper 52 sein, der mit einem Stift 53, der eine Bohrung 54 des Ringkörper 52 durchsetzt, gegen ein unbeabsichtigtes Verdrehen in der Umlaufnut 44 gesichert ist. Ein mit einem Ringkörper 52 versehenes Rückschlagventil benötigt einen höheren Öffnungsdruck als ein mit einem O-Ring 50 gebildetes Rückschlagventil und ermöglicht die Ausbildung eines kleinvolumigen Schwingungsdämpfers 1.

Fig. 7 der Zeichnung zeigt eine detaillierte Darstellung der ersten Einstellnadel 23 nach einer Ausführungsform gemäß der vorliegenden Erfindung.

Die Einstellnadel 23 besitzt den bereits erwähnten zylindrischen Führungsabschnitt 42, der sich innerhalb des Fluidkommunikationsabschnitts 17 angeordnet befindet. In Axiallängsrichtung der Einstellnadel 23 schließt sich an den Führungsabschnitt 42 ein sich radial in Richtung nach außen erweiternder Abschnitt 55 an, der in den bereits im Zusammenhang mit Fig. 2 erwähnten Abschnitt 41 übergeht, der sich vom Abschnitt 55 und vom Führungsabschnitt 42 aus betrachtet verjüngt. Wie es ohne weiteres anhand von Fig. 7 der Zeichnung ersichtlich ist, besitzt der Abschnitt 41 in Axiallängsrichtung betrachtet fünf Abschnitte mit unterschiedlichen Außendurchmessern, zwischen denen der Außendurchmesser jeweils linear ansteigt.

Wird die Einstellnadel 23 in Richtung der Stirnfläche 40 des Hülsenkörper 29 verschoben, dann wird der Ringspaltraum 39 allmählich kleiner und die Drosselwirkung steigt dementsprechend an.

Es ist ganz allgemein möglich, den Abschnitt 41 mit einem größten und einen kleinsten Durchmesser in Axiallängsrichtung der Einstellnadel 23 betrachtet auszubilden und eine Durchmesserveränderung zwischen dem kleinsten und größten Durchmesser so auszubilden, dass sich der Durchmesser linear verändert, progressiv verändert, degressiv verändert oder beispielsweise eine Umhüllende ausbildet, die in ihrer Steigung einen Wendepunkt ausbildet.

Der sich an den Abschnitt 41 anschließende Abschnitt 56 dient der Führung der Einstellnadel 23 und der sich daran anschließende Abschnitt 57 dient der Aufnahme der Federeinrichtung 28, über die sich die Einstellnadel 23 am Hülsenkörper 29 abstützt.

Fig. 8 der Zeichnung zeigt eine Schnittdarstellung der zweiten Einstellnadel 21. Diese weist einen zylindrischen Führungsabschnitt 58 auf, mit dem die Einstellnadel 21 in der Innenausnehmung des Hülsenkörper 31 axial geführt ist. Die Einstellnadel 21 besitzt einen Bund 59, an dem sich die Federeinrichtung 30 abstützt, die die Einstellnadel 21 gegen den Hülsenkörper 31 abstützt. Eine axiale Verlagerungsbewegung der Stellhülse 20 sorgt für ein Zusammendrücken der Federeinrichtung 30 in der Form einer Schraubendruckfeder und dafür, dass der Nadelabschnitt 46 der Einstellnadel 21 so relativ zum vierten Durchlass 45 verlagert wird, dass der Ringspaltraum 47 verkleinert wird. In entsprechender Weise sorgt eine Entspannungsbewegung der Federeinrichtung 30 dafür, dass der Ringspaltraum 47 wieder vergrößert wird.

In zu dem Abschnitt 41 der ersten Einstellnadel 23 ähnlicher Weise ist der Nadelabschnitt 46 der zweiten Einstellnadel 21 vom Führungsabschnitt 58 aus betrachtet in sich verjüngender Weise ausgebildet. Auf diese Weise sorgt eine Verlagerungsbewegung des Nadelabschnitts 46 relativ zu dem Bund 49 dafür, dass der Durchströmungsquerschnitt 48 vergrößert und verkleinert werden kann und somit die Drosselwirkung vergrößert oder verkleinert werden kann.

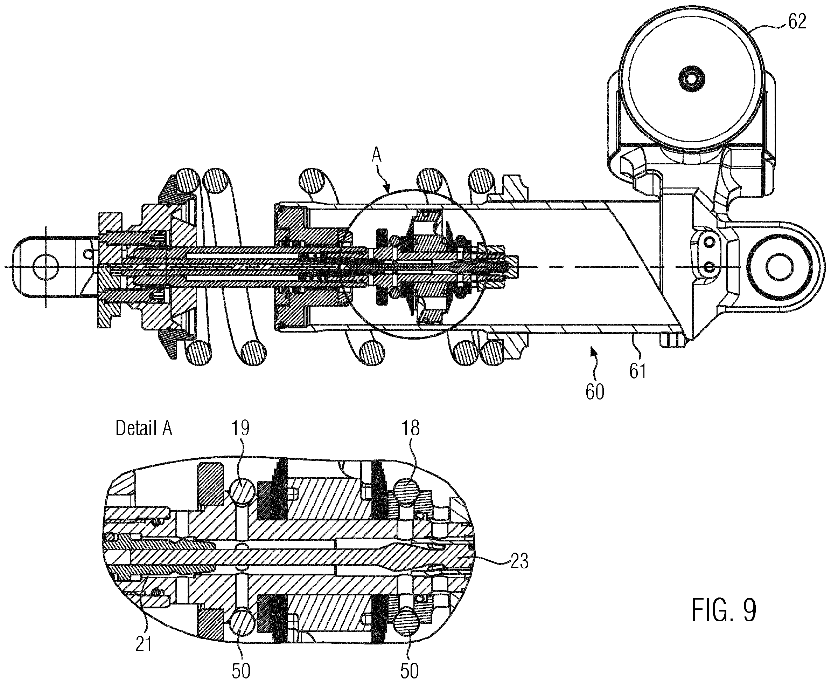

Fig. 9 der Zeichnung zeigt eine Schnittdarstellung eines Schwingungsdämpfers 60 nach einer modifizierten Ausführungsform. Wie es ohne weiteres anhand der Einzelheit "A" ersichtlich ist, besitzt der Schwingungsdämpfer 60 wiederum eine zweite Einstellnadel 21, eine erste Einstellnadel 23 und zwei Rückschlagventile 18, 19, die mit O-Ringen 50 ausgestattet sind.

Im Unterschied zu dem in Fig. 1 der Zeichnung dargestellten Schwingungsdämpfer 1 besitzt der Schwingungsdämpfer 60 einen Zylinder 61 kürzerer Baulänge als der Zylinder 6, was dadurch realisiert wird, dass der Aufnahmeraum 33 für Dämpfungsfluid und der Druckraum 34 aus dem Zylinder 61 heraus verlegt worden sind und in ein externes Gehäuse 62 verlagert worden sind. Der Innenraum des Gehäuses 62 steht mit dem Innenraum des Zylinders 61 in Fluidverbindung, so dass aus dem Zylinder 61 Dämpfungsfluid in den Innenraum des Gehäuses 62 bei einer Einfederbewegung verschoben werden kann und bei einer Ausfederbewegung wieder entsprechend in den Innenraum des Zylinders 61 zurück verschoben werden kann.

Der Schwingungsdämpfer 60 besitzt den Vorteil kürzerer Baulänge und kann daher an einem Fahrzeug, beispielsweise einem nicht näher dargestellten Motorrad verbaut werden, bei dem weniger Aufnahmeraum für den Einbau eines erfindungsgemäßen Schwingungsdämpfers zur Verfügung steht.

Der erfindungsgemäße Schwingungsdämpfer besitzt den Vorteil, dass Rückschlagventile verwendet werden können, die aus einem Werkstoff mit niedrigem Elastizitätsmodul gefertigt sind. Dies führt zu einem sehr feinfühligen Ansprechen des Schwingungsdämpfers, wie es beispielsweise im Rennsport von großem Vorteil ist. Die Möglichkeit der Ausbildung der Ventileinrichtung der Rückschlagventile als O-Ring führt dazu, dass die Ventileinrichtungen sehr einfach getauscht werden können und gegen Ventileinrichtungen mit einem anderen Öffnungsverhalten ausgetauscht werden können. Auch dies ist beispielsweise beim Rennsport von großem Vorteil, da so das Ansprechverhalten des Schwingungsdämpfers an der Rennstrecke rasch verändert werden kann, wobei hierzu auch die einfache Austauschbarkeit der beiden Einstellnadeln wesentlich beiträgt.

Die Einstellnadeln können mit Abschnitten zur Veränderung des für die Durchströmung von Dämpfungsfluid zur Verfügung stehenden Ringspaltraums versehen sein, die an unterschiedliche Anforderungen beispielsweise auch streckenspezifisch angepasst werden können. Bereits montierte Einstellnadeln können einfach gegen Einstellnadeln mit anderen Nadelabschnitten ausgetauscht werden, indem sie aus dem Innenraum der Kolbenstange herausgenommen werden und gegen andere Einstellnadeln ausgetauscht werden. Die Betätigung der Einstellnadeln erfordert lediglich eine axiale Bewegung der Verstelleinrichtung in der Form der Stellhülse und der Stellstange, die durch eine einfache Drehbetätigung der am Schwingungsdämpfer außen angeordneten Stellelemente in der Form von beispielsweise Rändelscheiben oder Rändelrädern implementiert werden kann. Der Benutzer erkennt anhand der Drehrichtung der Betätigung der Rändelscheiben oder Rändelräder, in welche Richtung er die Dämpfungscharakteristik verändert, das heißt also in Zugrichtung mehr Dämpfung oder weniger Dämpfung und in Druckrichtung mehr Dämpfung oder weniger Dämpfung. Die Wirkung der vom Benutzer herbeigeführten Veränderung ist also klar und eindeutig festgelegt.

Die Verwendung radial wirkender Rückschlagventile sorgt für einen kostengünstigen Aufbau des erfindungsgemäßen Schwingungsdämpfers und der Schwingungsdämpfer besitzt weiterhin den Vorteil, dass die Kompressionsdämpfung und die Rebounddämpfung völlig unabhängig voneinander einstellbar sind. Der erfindungsgemäße Schwingungsdämpfer eignet sich zur Verwendung mit einem Einrohrfederdämpfer, Zweirohrfederdämpfer, Feder-Dämpfern nach der de Carbon Bauart, um nur einige Bauarten zu nennen.

Hinsichtlich vorstehend im einzelnen nicht näher erläuterter Merkmale der Erfindung wird in übrigen ausdrücklich auf die Patentansprüche und die Zeichnung verwiesen.

**Bezugszeichenliste**

| | | | |
|---|---|---|---|
| 1 | Schwingungsdämpfer | 31 | Hülsenkörper |
| 2 | Federbein | 32 | Trennkolben, Dichtscheibe |
| 3 | Hauptfeder | 33 | Aufnahmeraum |
| 4 | Federbeinauge | 34 | Druckraum |
| 5 | Federbeinauge | 35 | Trennkolben |
| 6 | Zylinder | 36 | erster Durchlass |
| 7 | Innenraum | 37 | zweiter Durchlass |
| 8 | Arbeitskolben | 38 | dritter Durchlass |
| 9 | Fluiddurchlass | 39 | Ringspaltraum |
| 10 | Fluiddurchlass | 40 | Stirnfläche |
| 11 | Ventileinrichtung | 41 | Erweiterung |
| 12 | Ventileinrichtung | 42 | Führungsabschnitt |
| 13 | erster Arbeitsraum | 43 | Ringkörper |
| 14 | zweiter Arbeitsraum | 44 | Umlaufnut |
| 15 | Kolbenstange | 45 | vierter Durchlass |
| 16 | Innenraum | 46 | Nadelabschnitt |
| 17 | Fluidkommunikationsdurchlass | 47 | Ringspaltraum |
| 18 | erstes Rückschlagventil | 48 | Durchströmungsquerschnitt |
| 19 | zweites Rückschlagventil | 49 | Bund |
| 20 | Stellhülse | 50 | O-Ring |
| 21 | zweite Einstellnadel | 51 | ringförmiger Körper |
| 22 | Stellstange | 52 | Ringkörper |
| 23 | erste Einstellnadel | 53 | Stift |
| 24 | Innenausnehmung | 54 | Bohrung |
| 25 | Stellelement | 55 | Abschnitt |
| 26 | Stellelement | 56 | Abschnitt |
| 27 | Verschlußdeckel | 57 | Abschnitt |
| 28 | Federeinrichtung | 58 | Führungsabschnitt |
| 29 | Hülsenkörper | 59 | Bund |
| 30 | Federeinrichtung | 60 | Schwingungsdämpfer |
| 60 | Zylinder | | |
| 61 | Gehäuse | | |

## Patentansprüche

1. Schwingungsdämpfer mit einem zur Aufnahme von Dämpfungsfluid ausgebildeten Zylinder (6; 61) und einem darin axial beweglichen Arbeitskolben (8), der an einer mit einem Axialdurchlass ausgebildeten Kolbenstange (15) geführt angeordnet ist und einen Zylinderinnenraum (7) in einen ersten (13) und einen zweiten (14) Arbeitsraum unterteilt und der Schwingungsdämpfer (1; 60) einen die Kolbenstange (15) zumindest abschnittsweise axial durchsetzenden Fluidkommunikationsdurchlass (17) für den Fluidaustausch zwischen den Arbeitsräumen (13, 14) und eine erste Verstelleinrichtung zur Einstellung der Druckstufendämpfung sowie eine zweite Verstelleinrichtung zur Einstellung der Zugstufendämpfung aufweist und eine Verstelleinrichtung mittels einer im Axialdurchlass der Kolbenstange (15) angeordneten und mit einem Axialdurchlass (24) versehenen Stellhülse (20) verstellbar ist und die andere Verstelleinrichtung mittels einer in dem Axialdurchlass der Stellhülse (20) angeordneten Stellstange (22) verstellbar ist, wobei die erste Verstelleinrichtung eine in dem Fluidkommunikationsdurchlass axial verschiebbare erste Einstellnadel (23) und die zweite Verstelleinrichtung eine in Axiallängsrichtung der Kolbenstange (15) axial verschiebbare und mit einer Innenausnehmung (24) ausgebildete zweite Einstellnadel (21) ist, **dadurch gekennzeichnet, dass** der Schwingungsdämpfer ein sich in den jeweiligen Arbeitsraum (13, 14) öffnendes Rückschlagventil (18, 19) aufweist.

2. Schwingungsdämpfer nach Anspruch 1, **dadurch gekennzeichnet, dass** mindestens eine Einstellnadel (21, 23) am Außenumfang zur Veränderung des eine Durchlassöffnung (36, 45) durchsetzenden Dämpfungsfluidmassenstroms ausgebildet ist, die einen Axiallängsdurchlass der Kolbenstange (15) und einen Arbeitsraum fluidisch verbindet.

3. Schwingungsdämpfer nach Anspruch 1 oder 2, **dadurch gekennzeichnet, dass** die zweite Einstellnadel (21) in dem Axialdurchlass der Kolbenstange (15) axial verschiebbar angeordnet ist.

4. Schwingungsdämpfer nach einem der vorstehenden Ansprüche, **dadurch gekennzeichnet, dass** die erste Einstellnadel (23) mittels der im Axialdurchlass der Stellhülse (20) angeordneten Stellstange (22) axial verschiebbar ist.

5. Schwingungsdämpfer nach einem der vorstehenden Ansprüche, **dadurch gekennzeichnet, dass** sich die zweite Einstellnadel (21) über eine Federeinrichtung (30) an einem Hülsenkörper (31) abstützt und mittels der Stellhülse (20) gegen die Schraubenfeder (30) axial verlagerbar ist.

6. Schwingungsdämpfer nach einem der vorstehenden Ansprüche, **dadurch gekennzeichnet, dass** sich die erste Einstellnadel (23) über eine Federeinrichtung (28) gegen einen Hülsenkörper (29) abstützt.

7. Schwingungsdämpfer nach einem der vorstehenden Ansprüche, **dadurch gekennzeichnet, dass** die Kolbenstange (15) im Bereich des Fluidkommunikationsdurchlasses (17) mindestens zwei im Abstand zueinander angeordnete Durchlässe (36, 37) aufweist, die sich vom Fluidkommunikationsdurchlass (17) bis in den jeweiligen Arbeitsraum (13, 14) erstrecken und jeweils mit einer sich in Richtung zu dem jeweiligen Arbeitsraum zur Fluidströmung bei Beaufschlagung mit in Richtung nach außen wirkendem Druck von bestimmter Größe öffnenden Ventileinrichtung (18, 19) versehen sind.

8. Schwingungsdämpfer nach Anspruch 7, **dadurch gekennzeichnet, dass** die Ventileinrichtung (18, 19) ein elastischer Ringkörper (43) oder ein rohrstückförmiger elastischer Körper (51) ist, der mit radial nach innen wirkender Vorspannung in einer Umlaufnut (44) der Kolbenstange (15) angeordnet ist.

9. Schwingungsdämpfer nach Anspruch 7, **dadurch gekennzeichnet, dass** die Ventileinrichtung (18, 19) ein rohrstückförmiger Körper (52) ist, der mit radial nach innen wirkender Vorspannung in einer Umlaufnut (44) der Kolbenstange (15) angeordnet ist.

10. Schwingungsdämpfer nach einem der vorstehenden Ansprüche, **dadurch gekennzeichnet, dass** der Arbeitskolben (8) jeweils mindestens einen mittels einer Ventileinrichtung (11, 12) versperrbaren und zum unidirektionalen Fluidaustausch zwischen den Arbeitsräumen (13, 14) freigebbaren Fluiddurchlass (9, 10) aufweist.

11. Schwingungsdämpfer nach einem der vorstehenden Ansprüche, **gekennzeichnet durch** einen an der Zylinderinnenwand dichtend angeordneten Trennkolben (32), der zwischen einem Arbeitsraum (13) und einem Aufnahmeraum (33) für Dämpfungsfluid angeordnet ist, welches von der in den Arbeitsraum (14) eintauchenden Kolbenstange (15) verschoben ist.

12. Schwingungsdämpfer nach einem der vorstehenden Ansprüche, **gekennzeichnet durch** einen fluidisch vom mit Dämpfungsfluid gefüllten Innenraum (7) des Zylinders (6) getrennten und mit Gas gefüllten Druckraum (34), der zur Druckbeaufschlagung des Dämpfungsfluids im Arbeitsraum (13, 14) ausgebildet ist.

13. Schwingungsdämpfer nach einem der vorstehenden Ansprüche, **gekennzeichnet durch** ein jeweils mit der Stellhülse (20) und der Stellstange (22) in Wirkverbindung angeordnetes und außerhalb des Zylinders vorgesehenes Stellelement (25, 26), dessen Betätigung eine Axialverlagerung der Stellhülse (20) und der Stellstange (22) bewirkt.

14. Schwingungsdämpfer nach einem der vorstehenden Ansprüche, **dadurch gekennzeichnet, dass** die erste Einstellnadel (23) einen zylindrischen Führungsabschnitt (42) aufweist, der sich innerhalb der Fluidkommunikationsabschnitts (17) angeordnet befindet.

15. Schwingungsdämpfer nach Anspruch 14, **dadurch gekennzeichnet, dass** die erste Einstellnadel (23) einen zum Führungsabschnitt (42) beabstandeten Abschnitt (41) aufweist, der einen größeren Durchmesser als der Führungsabschnitt (42) aufweist und sich in Axiallängsrichtung der Einstellnadel (23) vom Führungsabschnitt (42) aus betrachtet im Querschnitt verjüngt.

16. Schwingungsdämpfer nach Anspruch 15, **dadurch gekennzeichnet, dass** die erste Einstellnadel (23) einen Abschnitt (55) aufweist, der in Axiallängsrichtung der Einstellnadel (23) betrachtet zwischen dem sich verjüngenden Abschnitt (41) und dem Führungsabschnitt (42) angeordnet ist und sich im Querschnitt in Richtung nach außen erweitert.

17. Schwingungsdämpfer nach Anspruch 15 oder 16, **dadurch gekennzeichnet, dass** der sich verjüngende Abschnitt (41) entlang der Axiallängsrichtung der ersten Einstellnadel Abschnitte mit unterschiedlichen Durchmessern aufweist.

18. Schwingungsdämpfer nach einem der Ansprüche 15 bis 17, **dadurch gekennzeichnet, dass** der sich verjüngende Abschnitt (41) entlang der Axiallängsrichtung der ersten Einstellnadel (23) Abschnitte mit unterschiedlichen Durchmessern aufweist und sich der Durchmesser im Bereich zwischen den Abschnitten linear verändert.

19. Schwingungsdämpfer nach einem der Ansprüche 15 bis 17, **dadurch gekennzeichnet, dass** der sich verjüngende Abschnitt (41) entlang der Axiallängsrichtung der ersten Einstellnadel (23) zwei Abschnitte mit unterschiedlichen Durchmessern aufweist und sich der Querschnitt zwischen den Abschnitten progressiv oder degressiv verändert.

20. Schwingungsdämpfer nach einem der vorstehenden Ansprüche, **dadurch gekennzeichnet, dass** die zweite Einstellnadel (21) einen zylindrischen Führungsabschnitt (58) aufweist, der sich in einem Abschnitt der Kolbenstange (15) oder einem Führungsabschnitt angeordnet befindet und im Abstand zu einem zur Veränderung eines Durchströmungsquerschnitts für Dämpfungsfluid ausgebildeten Nadelabschnitt (46) der Einstellnadel (21) angeordnet ist.

21. Schwingungsdämpfer nach Anspruch 20, **dadurch gekennzeichnet, dass** der Nadelabschnitt (46) in Axiallängsrichtung der Einstellnadel (21) vom Führungsabschnitt (46) aus betracht sich verjüngend ausgebildet ist.

22. Schwingungsdämpfer nach Anspruch 20 oder 21, **dadurch gekennzeichnet, dass** der Nadelabschnitt (46) entlang der Axiallängsrichtung der zweiten Einstellnadel (21) Abschnitte mit unterschiedlichen Durchmessern aufweist.

23. Schwingungsdämpfer nach Anspruch 20 oder 21, **dadurch gekennzeichnet, dass** der Nadelabschnitt (46) entlang der Axiallängsrichtung der zweiten Einstellnadel (21) Abschnitte mit unterschiedlichen Durchmessern aufweist und sich der Durchmesser im Bereich zwischen den Abschnitten linear verändert.

24. Schwingungsdämpfer nach Anspruch 20 oder 21, **dadurch gekennzeichnet, dass** der Nadelabschnitt (46) entlang der Axiallängsrichtung der zweiten Einstellnadel (21) zwei Abschnitte mit unterschiedlichen Durchmessern aufweist und sich der Querschnitt zwischen den Abschnitten progressiv oder degressiv verändert.

25. Schwingungsdämpfer nach einem der vorstehenden Ansprüche, **gekennzeichnet durch** eine Federeinrichtung (3), die den Zylinder (6, 61) zumindest abschnittsweise umgibt.

## Claims

1. A vibration damper having a cylinder (6; 61) designed for accommodating damping fluid and a working piston (8), which is axially movable in said cylinder, is arranged so as to be guided on a piston rod (15) formed with an axial opening, and divides a cylinder interior (7) into a first working chamber (13) and a second working chamber (14), and the vibration damper (1; 60) has a fluid communication opening (17), which passes through the piston rod (15) axially at least in some sections, for fluid exchange between the working chambers (13, 14), and a first adjustment device for setting the compression phase damping, and a second adjustment device for setting the extension phase damping, and one adjustment device is adjustable by means of a control bushing (20), which is arranged in the axial opening in the piston rod (15) and is provided with an axial opening (24), and the other adjustment device is adjustable by means of a control rod (22), which is arranged in the axial opening in the control bushing (20), the first adjustment device being a first setting needle (23), which is axially displaceable in the fluid communication opening, and the second adjustment device being a second setting needle (21), which is axially displaceable in the axial longitudinal direction of the piston rod (15) and is formed with an inner cut-out (24),
**characterised in that** the vibration damper has a check valve (18, 19) which opens into the respective working chamber (13, 14).

2. The vibration damper according to claim 1, **characterised in that** at least one setting needle (21, 23) is formed on the outer circumference to change the damping fluid mass flow passing through a through-opening (36, 45) which fluidically connects an axial longitudinal opening of the piston rod (15) and a working chamber.

3. The vibration damper according to claim 1 or 2, **characterised in that** the second setting needle (21) is arranged in an axially displaceable manner in the axial opening in the piston rod (15).

4. The vibration damper according to any one of the preceding claims, **characterised in that** the first setting needle (23) is axially displaceable by means of the control rod (22) arranged in the axial opening in the control bushing (20).

5. The vibration damper according to any one of the preceding claims, **characterised in that** the second setting needle (21) is supported on a bushing body (31) via a spring device (30) and is axially displaceable against the helical spring (30) by means of the control bushing (20).

6. The vibration damper according to any one of the preceding claims, **characterised in that** the first setting needle (23) is supported against a bushing body (29) via a spring device (28).

7. The vibration damper according to any one of the preceding claims, **characterised in that** the piston rod (15) has, in the region of the fluid communication opening (17), at least two openings (36, 37), which are arranged at a distance from one another and extend from the fluid communication opening (17) into the respective working chamber (13, 14), and are each provided with a valve device (18, 19), which opens in the direction of the respective working chamber for fluid flow when loaded with outwardly effective pressure of a certain magnitude.

8. The vibration damper according to claim 7, **characterised in that** the valve device (18, 19) is an elastic annular body (43) or an elastic tubular body (51), which is arranged with radially inwardly effective prestress in a circumferential groove (44) in the piston rod (15).

9. The vibration damper according to claim 7, **characterised in that** the valve device (18, 19) is a tubular body (52), which is arranged with radially inwardly effective prestress in a circumferential groove (44) in the piston rod (15).

10. The vibration damper according to any one of the preceding claims, **characterised in that** the working piston (8) has in each case at least one fluid opening (9, 10), which, by means of a valve device (11, 12), can be blocked and opened for unidirectional fluid exchange between the working chambers (13, 14).

11. The vibration damper according to any one of the preceding claims, **characterised by** a dividing piston (32), which is arranged sealingly on the cylinder wall and is arranged between a working chamber (13) and an accommodating chamber (33) for damping fluid, which is displaced by the piston rod (15) passing into the working chamber (14).

12. The vibration damper according to any one of the preceding claims, **characterised by** a pressure chamber (34), which is fluidically separated from the interior (7) of the cylinder (6) filled with damping fluid and is filled with gas, and is formed to apply pressure to the damping fluid in the working chamber (13, 14).

13. The vibration damper according to any one of the preceding claims, **characterised by** a control element (25, 26), which is operatively connected to the control bushing (20) and to the control rod (22) and is provided outside the cylinder, and the actuation of which effects an axial displacement of the control bushing (20) and the control rod (22).

14. The vibration damper according to any one of the preceding claims, **characterised in that** the first setting needle (23) has a cylindrical guide section (42), which is arranged inside the fluid communication section (17).

15. The vibration damper according to claim 14, **characterised in that** the first setting needle (23) has a section (41) which is at a distance from the guide section (42) and has a larger diameter than the guide section (42) and tapers in cross-section in the axial longitudinal direction of the setting needle (23) as viewed from the guide section (42).

16. The vibration damper according to claim 15, **characterised in that** the first setting needle (23) has a section (55) which is arranged between the tapering section (41) and the guide section (42) as viewed in the axial longitudinal direction of the setting needle (23) and widens in cross-section in the outward direction.

17. The vibration damper according to claim 15 or 16, **characterised in that** the tapering section (41) has sections with different diameters in the axial longitudinal direction of the first setting needle.

18. The vibration damper according to any one of claims 15 to 17, **characterised in that** the tapering section (41) has sections with different diameters in the axial longitudinal direction of the first setting needle (23), and the diameter changes linearly in the region between the sections.

19. The vibration damper according to any one of claims 15 to 17, **characterised in that** the tapering section (41) has two sections with different diameters in the axial longitudinal direction of the first setting needle (23), and the cross-section changes progressively or degressively between the sections.

20. The vibration damper according to any one of the preceding claims, **characterised in that** the second setting needle (21) has a cylindrical guide section (58), which is arranged in a section of the piston rod (15) or a guide section and is arranged at a distance from a needle section (46) of the setting needle (21) formed for changing a flow cross-section for damping fluid.

21. The vibration damper according to claim 20, **characterised in that** the needle section (46) tapers in the axial longitudinal direction of the setting needle (21) as viewed from the guide section (46).

22. The vibration damper according to claim 20 or 21, **characterised in that** the needle section (46) has sections with different diameters in the axial longitudinal direction of the second setting needle (21).

23. The vibration damper according to claim 20 or 21, **characterised in that** the needle section (46) has sections with different diameters in the axial longitudinal direction of the second setting needle (21), and the diameter changes linearly in the region between the sections.

24. The vibration damper according to claim 20 or 21, **characterised in that** the needle section (46) has two sections with different diameters in the axial longitudinal direction of the second setting needle (21), and the cross-section changes progressively or degressively between the sections.

25. The vibration damper according to any one of the preceding claims, **characterised by** a spring device (3) which surrounds the cylinder (6, 61) at least in some sections.

## Revendications

1. Amortisseur d'oscillations avec un cylindre (6 ; 61) constitué pour loger du fluide d'amortissement et un piston de travail (8) axialement mobile dans celui-ci, qui est disposé guidé sur une tige de piston (15) constituée avec un passage axial et un compartiment intérieur de cylindre (7) réparti dans un premier (13) et un deuxième (14) espace de travail et l'amortisseur d'oscillations (1 ; 60) comportant un passage de communication de fluide (17) traversant axialement au moins en partie la tige de piston (15) pour l'échange de fluide entre les espaces de travail (13, 14) et un premier dispositif de réglage pour régler l'amortissement du palier de pression ainsi qu'un deuxième dispositif de réglage pour régler l'amortissement du palier de traction et un dispositif de réglage pouvant être réglé au moyen d'une douille de réglage (20) disposée dans le passage axial de la tige de piston (15) et dotée d'un passage axial (24) et l'autre dispositif de réglage pouvant être réglé au moyen d'une tige de réglage (22) disposée dans le passage axial de la douille de réglage (20), le premier dispositif de réglage étant une première aiguille de réglage (23) axialement mobile dans le passage de communication de fluide et le deuxième dispositif de réglage une deuxième aiguille de réglage (21) axialement mobile dans la direction longitudinale axiale de la tige de piston (15) et constituée avec un évidement intérieur (24),
**caractérisé en ce que** l'amortisseur d'oscillations comporte un clapet antiretour (18, 19) s'ouvrant dans l'espace de travail respectif (13, 14).

2. Amortisseur d'oscillations selon la revendication 1, **caractérisé en ce qu'**au moins une aiguille de réglage (21, 23) est constituée sur la périphérie extérieure pour modifier le débit de fluide d'amortissement traversant une ouverture de passage (36, 45), qui relie en fluide un passage longitudinal axial de la tige de piston (15) et un espace de travail.

3. Amortisseur d'oscillations selon la revendication 1 ou 2, **caractérisé en ce que** la deuxième aiguille de réglage (21) est disposée axialement mobile dans le passage axial de la tige de piston (15).

4. Amortisseur d'oscillations selon l'une quelconque des revendications précédentes, **caractérisé en ce que** la première aiguille de réglage (23) est axialement mobile au moyen de la tige de réglage (22) disposée dans le passage axial de la douille de réglage (20).

5. Amortisseur d'oscillations selon l'une quelconque des revendications précédentes, **caractérisé en ce que** la deuxième aiguille de réglage (21) s'appuie par le biais d'un dispositif à ressort (30) sur un corps de douille (31) et peut être axialement déplacée au moyen de la douille de réglage (20) contre le ressort hélicoïdal (30).

6. Amortisseur d'oscillations selon l'une quelconque des revendications précédentes, **caractérisé en ce que** la première aiguille de réglage (23) s'appuie par le biais d'un dispositif à ressort (28) contre un corps de douille (29).

7. Amortisseur d'oscillations selon l'une quelconque des revendications précédentes, **caractérisé en ce que** la tige de piston (15) comporte dans la zone du passage de communication de fluide (17) au moins deux passages (36, 37) disposés à distance l'un de l'autre, qui s'étendent du passage de communication de fluide (17) jusque dans l'espace de travail respectif (13, 14) et sont respectivement dotés d'un dispositif à clapet (18, 19) s'ouvrant en direction de l'espace de travail respectif vers le flux de fluide lors de l'application d'une pression d'une certaine grandeur agissant en direction de l'extérieur.

8. Amortisseur d'oscillations selon la revendication 7, **caractérisé en ce que** le dispositif à clapet (18, 19) est un corps annulaire élastique (43) ou un corps élastique de forme tubulaire (51), qui est disposé avec une précontrainte agissant radialement vers l'intérieur dans une rainure périphérique (44) de la tige de piston (15).

9. Amortisseur d'oscillations selon la revendication 7, **caractérisé en ce que** le dispositif à clapet (18, 19) est un corps de forme tubulaire (52), qui est disposé avec une précontrainte agissant radialement vers l'intérieur dans une rainure périphérique (44) de la tige de piston (15).

10. Amortisseur d'oscillations selon l'une quelconque des revendications précédentes, **caractérisé en ce que** le piston de travail (8) comporte respectivement au moins un passage de fluide (9, 10) pouvant être bloqué au moyen d'un dispositif à clapet (11, 12) et pouvant être libéré pour un échange de fluide unidirectionnel entre les espaces de travail (13, 14).

11. Amortisseur d'oscillations selon l'une quelconque des revendications précédentes, **caractérisé par** un piston séparateur (32) disposé hermétiquement sur la paroi intérieure du cylindre, qui est disposé entre un espace de travail (13) et un espace de réception (33) pour le fluide d'amortissement, lequel est déplacé par la tige de piston (15) plongeant dans l'espace de travail (14).

12. Amortisseur d'oscillations selon l'une quelconque des revendications précédentes, **caractérisé par** un espace de pression (34) séparé en fluide de l'espace intérieur (7) rempli de fluide d'amortissement du cylindre (6) et rempli de gaz, qui est constitué pour l'application d'une pression du fluide d'amortissement dans l'espace de travail (13, 14).

13. Amortisseur d'oscillations selon l'une quelconque des revendications précédentes, **caractérisé par** un élément de réglage (25, 26) disposé en liaison fonctionnelle respectivement avec la douille de réglage (20) et la tige de réglage (22) et prévu en dehors du cylindre, dont l'actionnement entraîne un déplacement axial de la douille de réglage (20) et de la tige de réglage (22).

14. Amortisseur d'oscillations selon l'une quelconque des revendications précédentes, **caractérisé en ce que** la première aiguille de réglage (23) comporte une section de guidage cylindrique (42) qui se trouve disposée à l'intérieur de la section de communication de fluide (17).

15. Amortisseur d'oscillations selon la revendication 14, **caractérisé en ce que** la première aiguille de réglage (23) comporte une section (41) à distance de la section de guidage (42), qui comporte un diamètre supérieur à la section de guidage (42) et diminue en section dans la direction longitudinale axiale de l'aiguille de réglage (23) vue de la section de guidage (42).

16. Amortisseur d'oscillations selon la revendication 15, **caractérisé en ce que** la première aiguille de réglage (23) comporte une section (55) qui est disposée vue en direction longitudinale axiale de l'aguille de réglage (23) entre la section se réduisant (41) et la section de guidage (42) et s'élargit en section transversale en direction de l'extérieur.

17. Amortisseur d'oscillations selon la revendication 15 ou 16, **caractérisé en ce que** la section se réduisant (41) comporte le long de la direction longitudinale axiale de la première aiguille de réglage, des sections avec des diamètres différents.

18. Amortisseur d'oscillations selon l'une quelconque des revendications 15 à 17, **caractérisé en ce que** la section se réduisant (41) comporte le long de la direction longitudinale axiale de la première aiguille de réglage (23), des sections avec des diamètres différents et le diamètre varie de façon linéaire dans la zone située entre les sections.

19. Amortisseur d'oscillations selon l'une quelconque des revendications 15 à 17, **caractérisé en ce que** la section se réduisant (41) comporte le long de la direction longitudinale axiale de la première aiguille de réglage (23), deux sections avec des diamètres différents et la section transversale varie de manière progressive ou dégressive entre les sections.

20. Amortisseur d'oscillations selon l'une quelconque des revendications précédentes, **caractérisé en ce que** la deuxième aiguille de réglage (21) comporte une section de guidage cylindrique (58) qui se trouve disposée dans une section de la tige de piston (15) ou une section de guidage et est disposée à distance d'une section d'aiguille (46) de l'aiguille de réglage (21), constituée pour modifier une section de passage pour le fluide d'amortissement.

21. Amortisseur d'oscillations selon la revendication 20, **caractérisé en ce que** la section d'aiguille (46) est constituée se réduisant dans la direction longitudinale axiale de l'aiguille de réglage (21) vue de la section de guidage (46).

22. Amortisseur d'oscillations selon la revendication 20 ou 21, **caractérisé en ce que** la section d'aiguille (46) comporte le long de la direction longitudinale axiale de la deuxième aiguille de réglage (21) des sections avec des diamètres différents.

23. Amortisseur d'oscillations selon la revendication 20 ou 21, **caractérisé en ce que** la section d'aiguille (46) comporte le long de la direction longitudinale axiale de la deuxième aiguille de réglage (21) des sections avec des diamètres différents et le diamètre varie de façon linéaire dans la zone située entre les sections.

24. Amortisseur d'oscillations selon la revendication 20 ou 21, **caractérisé en ce que** la section d'aiguille (46) comporte le long de la direction longitudinale axiale de la deuxième aiguille de réglage (21) deux sections avec des diamètres différents et la section transversale varie de manière progressive ou dégressive entre les sections.

25. Amortisseur d'oscillations selon l'une quelconque des revendications précédentes, **caractérisé par** un dispositif à ressort (3), qui entoure au moins par section le cylindre (6, 61).
